# EUROPEAN PATENT SPECIFICATION

(11) **EP 1 795 388 B1**
(45) Date of publication and mention of the grant of the patent: **19.03.2008**
(21) Application number: 05026931.5
(22) Date of filing: 09.12.2005
(51) Int. Cl.: B60H 1/32

(54) **Condensate draining assembly for a heating, ventilating and/or air conditioning device of an automotive vehicle**
Baugruppe zum Ablassen von Kondensat für eine Heizungs-, Belüftungs- und/oder Klimaanlage eines Kraftfahrzeuges
Ensemble évacuateur de condensat pour une installation de chauffage, ventilation et/ou climatisation d'un véhicule automobile

(43) Date of publication of application: 13.06.2007
(73) Proprietor: VALEO AUTOKLIMATIZACE s.r.o., CP 269 44 Rakovnik (CZ)
(72) Inventor: Horacek, Petr, Plzen-City 320 00 (CZ)
(74) Representative: Léveillé, Christophe

(56) References cited:
- DE-A1- 3 611 009
- DE-C1- 19 647 734
- FR-A- 2 769 694
- FR-A- 2 825 951

## Description

The invention relates to a condensate draining assembly for a heating, ventilating and/or air conditioning device of an automotive vehicle.

Modem automotive vehicles are equipped with a heating, ventilating and/or or air conditioning device which comprises an evaporator in order to produce cold air by heat exchange, this cold air being further ventilated in the passenger compartment of the vehicle.

During the heat exchange, the exterior or recirculated air is dehumidified. Drops of water are formed on the surface of the evaporator, which constitute condensates which must be drained. To this aim, a housing is disposed below the evaporator, and condensates are further drained out of the vehicle by means of an evacuation pipe connected to the housing. Typically, the evacuation pipe is mounted in the bottom part of the housing so as to use gravity to drain condensates out of the housing.

This assembly is produced as a separate module of the vehicle, which is mounted at the same time as the dashboard. Thus, during transport of the housing with the evacuation pipe, and more precisely before mounting on the automotive vehicle, the draining pipe may detach itself from the housing before mounting, or it may have problems fitting within the vehicle, which complicates the overall assembly operation and its automation.

FR 2,825,951 describes a draining assembly, having an evacuation opening in the lowest part of its housing. This opening receives an evacuation pipe located outside the housing, on its side. This pipe is maintained along the side of the housing during transport and before mounting by means of a hook in the outer surface of the housing, which is breakable in order to mount the evacuation pipe on the automotive vehicle.

This assembly is cumbersome in terms of manufacturing, assembly time and in terms of space, since the evacuation pipe uses space aside of the housing. Moreover, there is no possibility to place the assembly with its lowest part on top of the evacuation opening of the vehicle which receives the evacuation pipe, which reduces the design possibilities.

Furthermore, there is known from FR 2.769.694 a condensate draining assembly upon which the preamble of appending claim 1 is based.

The invention aims at improving the situation.

To this aim, the invention proposes a condensate draining assembly for a heating, ventilating and/or air conditioning device of an automotive vehicle, comprising a housing having a condensate evacuation part with a pipe. Said condensate evacuation part comprises a flexible part connecting said pipe to said housing, which is moveable between a transport position wherein said pipe extends substantially within the housing and a delivery position wherein said pipe substantially protrudes from said housing.

Such a draining assembly is particularly advantageous in that the flexible part enables positioning the pipe directly under the lowest part of the housing. This offers a high degree of flexibility in the design of the assembly and of the vehicle. Furthermore, the situation of the pipe further reduces the space occupied by the assembly within the vehicle since it no longer has to be mounted on the side of the assembly as in the prior art.

In a first embodiment, said flexible part may extend in a first direction in the transport position and in a second direction substantially opposite to said first direction in said delivery position. The flexible part may have a tapered bellows shape. Advantageously, said taper bellows comprises concentric alternating ribs and grooves. In one embodiment, said condensate evacuation part is molded with said housing. These characteristics allow for easy manufacturing of the assembly as well as a great ease of use.

In another embodiment, said pipe has a tapered end and said pipe may be molded with said flexible part or fixed on said flexible part. Said flexible part may comprise a handle connected to the base of the pipe in order to facilitate the transition from the transport position to the delivery position.

In yet another embodiment, the assembly may comprise a grommet adapted to be received in an opening of an evacuation element of the vehicle substantially facing said pipe, said grommet having a reduced diameter portion such that the pipe may be locked in engagement with the grommet in said delivery position.

The invention also concerns a heating, ventilating and/or air conditioning device, comprising a draining assembly as described above.

Other features and advantages of the invention will be more apparent from the description, given in an exemplary and non-limitative way, of embodiments from the drawing on which :
- Figure 1 shows the arrangement of the invention in a vehicle in the transport position ;
- Figure 2 shows a view similar to that of figure 1, but with the assembly arranged in the delivery position ;
- Figure 3 shows a schematic view of a detail of figure 1 ;
- Figure 4 shows a schematic view of a detail of figure 2 ; and
- Figure 5 shows a simplified cross-sectional view of another embodiment.

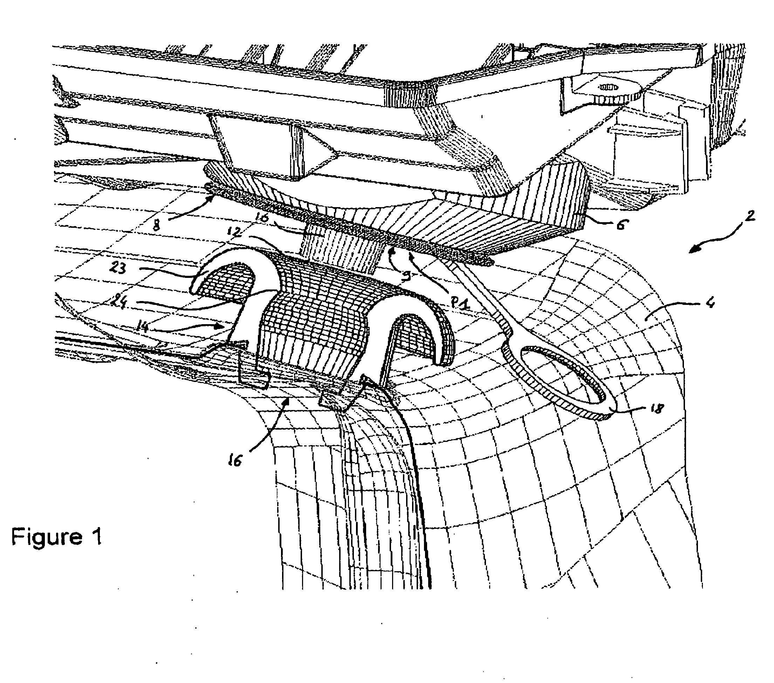

Figure 1 shows a general view of a condensate draining assembly 2 before mounting on a car structure 4.

More precisely, a housing 6 for receiving water condensates from the surface of a heating, ventilating and/or air conditioning device of the automotive vehicle is shown.

The housing 6 comprises a condensate evacuation part 8, which has a flexible part 9 and a pipe 10 substantially extending within housing 6 from the centre of flexible part 9.

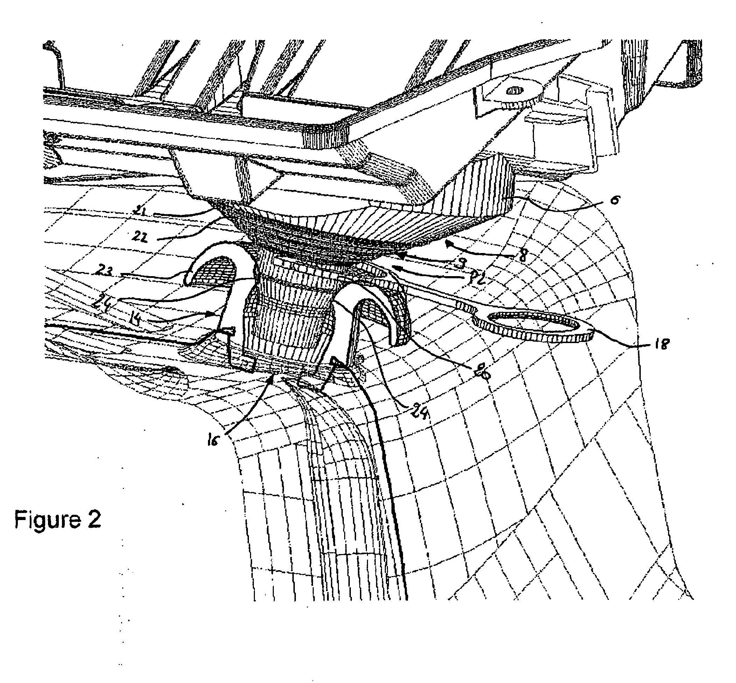

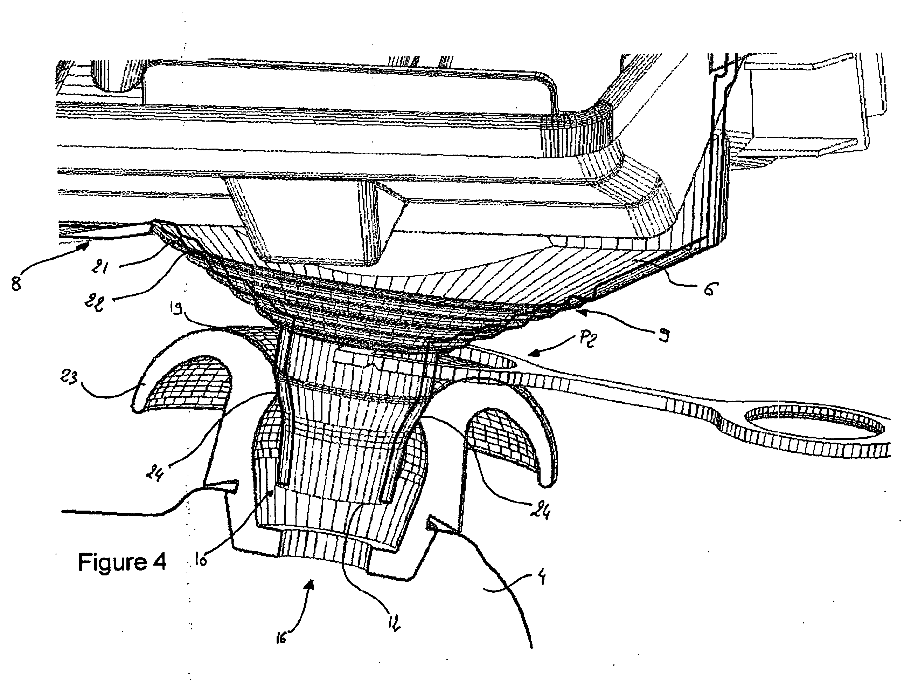

An end 12 of pipe 10 is tapered, and is directed towards a grommet 14. The grommet 14 is received in an opening 16 of the car structure 4 and will be further described with figures 2 and 4. The opening 16 is connected to an evacuation opening beneath the car (not shown) for exiting the water condensate.

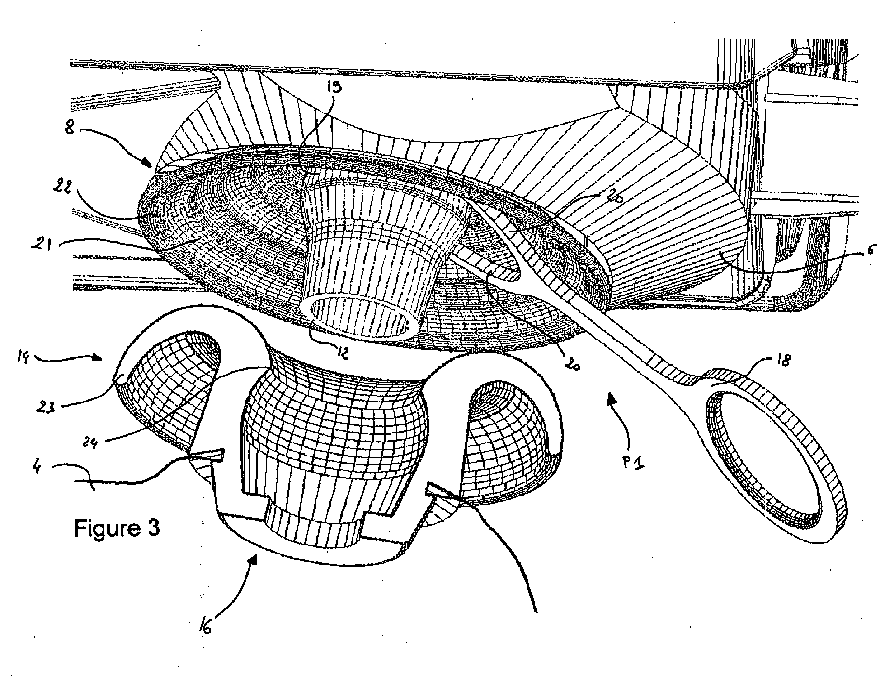

A handle 18 is further attached to a base 19 of pipe 10 (as visible on figure 3). Handle 18 is used to retrieve pipe 10 from the interior of the housing 6, and to transfer it from a transport position (figure 1) to a delivery position (figure 2).

In the example shown here, the handle 18 has two arms 20, each attached to a side of the base 19. However, the two arms 20 could be replaced by a single arm attached to an arc of base 19.

As shown on figure 3, the flexible part 9 has a tapered bellows shape with concentric alternating ribs 21 and grooves 22. In the example shown, flexible part 9 is made of plastic material used for the housing 6, such as polypropylene. It may also be made of charged polypropylene or other suitable material. The shape and flexibility of flexible part 9, ribs 21 and grooves 22 is achieved by reducing the thickness of the plastic material, in order to make a thin hinge.

In the transport position, referenced P1, flexible part 9 extends in an upward direction with respect to the bottom of housing 6. In this position, flexible part 9 substantially forms a funnel extending inwardly, such that pipe 10 substantially extends within housing 6.

The inward extension of the ribs 21 and grooves 22 generates an inner force in the upward direction. This force maintains flexible part 9 in the inwardly extending funnel shape, thus ensuring the stability during transport and before mounting on the vehicle.

In the example described herein, the housing 6, the flexible part 9, the pipe 10 and the handle 18 are all molded together, and are made of plastic materials such as polypropylene or charged polypropylene, or other suitable materials. However, pipe 10 and handle 18 may be formed separately and attached with appropriate techniques, such as gluing, stapling or others.

According to another embodiment, the handle 18 may be a separate element which is used to extract the flexible part 9 from its transport position P1.

Figure 2 shows a view similar to that of figure 1, except for the fact that the condensate draining assembly 2 is now in the delivery position. Figure 4 shows a schematic view of the connection between the condensate evacuation part 8 and the grommet 14.

In the delivery position, the handle 18 has been pulled downward. As a result, flexible part 9 extends in a direction substantially with regards to the one of the figure 1, in a position referenced P2. In this position, the flexible part 9 substantially forms a funnel extending outwardly, such that pipe 10 substantially extends out of the housing 6.

The grommet 14 has a substantially cylindrical shape extended by a peripheral lip 23. The cylindrical shape shows an engagement portion 24 having a diameter substantially smaller than that of the base 19 and substantially larger than that of end 12. In position P2, the tapered end 12 penetrates the grommet 14 and the engagement portion 24, and the base 19 of the pipe 10 engages the engagement portion 24, thus the locking pipe 10 and the grommet 14.

Moreover, the outward extension of ribs 21 and grooves 22 generates an inner force in the outward direction. This force maintains the flexible part 9 in the outwardly extending funnel shape, thus further ensuring the engagement between the pipe 10 and the grommet 14.

The assembly of the draining assembly on the vehicle, with the transition from the transport position to the delivery position, is conducted as such :
- the operator places the grommet 14 in the opening 16 of car structure 4 ;
- the assembly is placed, in the transport position, with pipe 10 substantially facing grommet 14 ;
- the operator pulls on the handle 18 downwardly, with the result that flexible part 9 moves from position P1 to position P2, and that the tapered end 12 penetrates the grommet 14, and that the base 19 engages the engagement portion 24.

The grommet 14 may be considered a part of the assembly, since it is designed to receive pipe 10 in the delivery position. It can be molded with the same plastic material as that of housing 6, flexible part 9, pipe 10 and handle 18, or of any other suitable type.

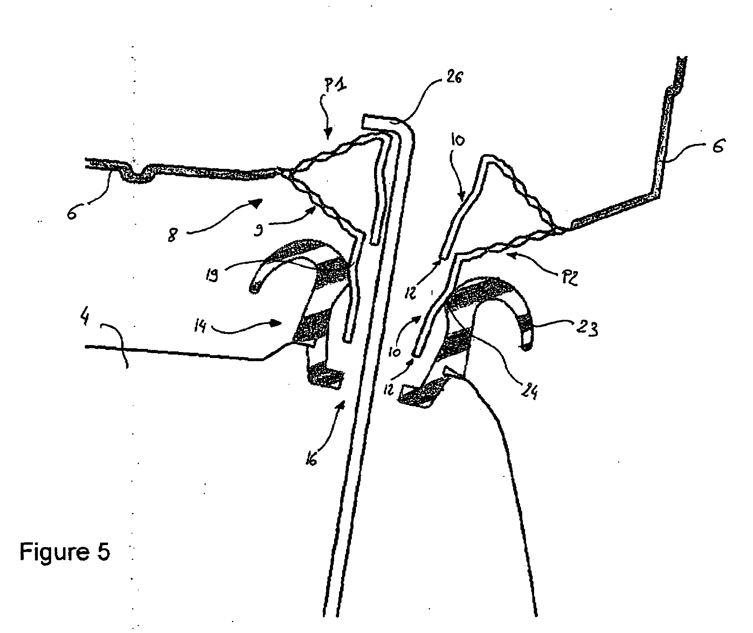

Figure 5 shows a schematic view of a simplified embodiment.

In this embodiment, the handle 18 is not necessary. The transition from the transport position to the delivery position is realized by the introduction of a hook 26 through the opening 16 and the pipe 10 all the way up to the bellows shaped flexible part 9.

The hook 26 is pulled down repeatedly in order to transfer the flexible part 9 from the position P1 to the position P2. This allows for a cost-friendly assembly.

A manual assembly may also be achieved, in which the mounting operator may directly pull on the tapered end 12 to transfer the flexible part 9 from the transport position to the delivery position.

The invention is not reduced to the above described examples, and it encompasses all of the alternative embodiments the man skilled in the art will consider, as defined by the following claims.

## Claims

1. Condensate draining assembly for a heating, ventilating and/or air conditioning device of an automotive vehicle comprising a housing (6) having a condensate evacuation part (8) with a pipe (10), said condensate evacuation part (8) comprises a flexible part (9) connecting said pipe (10) to said housing (6), **characterized in that** said condensate evacuation part (8) is moveable between a transport position (P1) wherein said pipe (10) extends substantially within the housing (6) and a delivery position (P2) wherein said pipe (10) substantially protrudes from said housing (6).

2. Assembly according to claim 1, wherein said flexible part (9) extends in a first direction in the transport position (P1) and in a second direction substantially opposite to said first direction in said delivery position (P2).

3. Assembly according to claim 1, wherein said flexible part (9) has a tapered bellows shape.

4. Assembly according to claim 2, wherein said tapered bellows comprises concentric alternating ribs (21) and grooves (22).

5. Assembly according to any of the preceding claims, wherein said condensate evacuation part (8) is molded with said housing (6).

6. Assembly according to any of the preceding claims, wherein said pipe (10) has a tapered end (12).

7. Assembly according to any of the preceding claims, wherein said pipe (10) is molded with said flexible part (9).

8. Assembly according to claim 1 to 5, wherein said pipe (10) is fixed on said flexible part (8).

9. Assembly according to any of the preceding claims, further comprising a handle (18) connected to the base (19) of said pipe (10), for transferring said flexible part (9) from the transfer position to the delivery position.

10. Assembly according to any of the preceding claims, further comprising a grommet (14) adapted to be received in an opening (16) of the vehicle, said grommet (14) having a reduced diameter portion (24) such that the pipe (10) may be locked in engagement with said grommet (14) in said delivery position (P2).

11. Heating, ventilating and/or air conditioning device, **characterized in that** it comprises a condensate draining assembly according to any of the preceding claims.

## Patentansprüche

1. Kondensatablaufanlage für eine Heizungs-, Belüftungs-und/oder Klimaeinrichtung eines Kraftfahrzeuges, die ein Gehäuse (6) umfasst, das eine Kondensatentleerungskomponente (8) mit einem Schlauch (10) aufweist, wobei die besagte Kondensatentleerungskomponente (8) eine biegsame Komponente (9) umfasst, die den besagten Schlauch (10) mit dem besagten Gehäuse (6) verbindet, **dadurch gekennzeichnet, dass** die besagte Kondensatentleerungskomponente (8) zwischen einer Transportposition (P1), in der sich der besagte Schlauch (10) im Wesentlichen innerhalb des Gehäuses (6) erstreckt, und einer Lieferposition (P2), in der der besagte Schlauch (10) im Wesentlichen aus dem besagten Gehäuse (6) herausragt, verschiebbar ist.

2. Anlage nach Anspruch 1, wobei sich die besagte biegsame Komponente (9) in einer ersten Richtung in die Transportposition (P1) und in einer zweiten Richtung, die der besagten ersten Richtung im Wesentlichen entgegengesetzt ist, in die Lieferposition (P2) erstreckt.

3. Anlage nach Anspruch 1, wobei die besagte biegsame Komponente (9) eine konische Balgform aufweist.

4. Anlage nach Anspruch 2, wobei der besagte konische Balg konzentrisch alternierende Rippen (21) und Rillen (22) umfasst.

5. Anlage nach einem der vorhergehenden Ansprüche, wobei die besagte Kondensatentleerungskomponente (8) mit dem besagten Gehäuse (6) geformt ist.

6. Anlage nach einem der vorhergehenden Ansprüche, wobei der besagte Schlauch (10) ein konisches Ende (12) aufweist.

7. Anlage nach einem der vorhergehenden Ansprüche, wobei der besagte Schlauch (10) mit der besagten biegsamen Komponente (9) geformt ist.

8. Anlage nach Anspruch 1 bis 5, wobei der besagte Schlauch (10) auf der besagten biegsamen Komponente (8) befestigt ist.

9. Anlage nach einem der vorhergehenden Ansprüche, wobei sie des Weiteren einen Griff (18) umfasst, der mit der Basis (19) des besagten Schlauches (10) verbunden ist, um die besagte biegsame Komponente (9) von der Transportposition in die Lieferposition zu bringen.

10. Anlage nach einem der vorhergehenden Ansprüche, wobei sie des Weiteren eine Tülle (14) umfasst, die angepasst ist, um in einer Öffnung (16) des Fahrzeuges aufgenommen zu werden, wobei die besagte Tülle (14) einen Teilbereich mit verringertem Querschnitt (24) aufweist, so dass in besagter Lieferposition (P2) der Schlauch (10) in die besagte Tülle (14) greifend blockiert werden kann.

11. Heizungs-, Belüftungs- und/oder Klimaeinrichtung, **dadurch gekennzeichnet, dass** sie eine Kondensatablaufanlage nach einem der vorhergehenden Ansprüche umfasst.

## Revendications

1. Ensemble évacuateur de condensation pour un dispositif de chauffage, de ventilation et/ou de climatisation d'un véhicule automobile comprenant un boîtier (6) présentant une partie d'évacuation de condensation (8) avec une canalisation (10), ladite partie d'évacuation de condensation (8) comprend une partie flexible (9) raccordant ladite canalisation (10) audit boîtier (6), **caractérisé en ce que** ladite partie d'évacuation de condensation (8) est mobile entre une position de transport (P1) dans laquelle ladite canalisation (10) s'étend sensiblement dans le boîtier (6) et une position de distribution (P2) dans laquelle ladite canalisation (10) fait sensiblement saillie depuis ledit boîtier (6).

2. Ensemble selon la revendication 1, dans lequel ladite partie flexible (9) s'étend dans une première direction dans la position de transport (P1) et dans une seconde direction sensiblement opposée à ladite première direction dans ladite position de distribution (P2).

3. Ensemble selon la revendication 1, dans lequel la partie flexible (9) présente une forme de soufflet effilé.

4. Ensemble selon la revendication 2, dans lequel ledit soufflet effilé comprend des nervures (21) et des rainures (22) concentriques alternées.

5. Ensemble selon l'une quelconque des revendications précédentes, dans lequel ladite partie d'évacuation de condensation (8) est moulée avec ledit boîtier (6).

6. Ensemble selon l'une quelconque des revendications précédentes, dans lequel ladite canalisation (10) présente une extrémité effilée (12).

7. Ensemble selon l'une quelconque des revendications précédentes, dans lequel ladite canalisation (10) est moulée avec ladite partie flexible (9).

8. Ensemble selon les revendications 1 à 5, dans lequel ladite canalisation (10) est fixée sur ladite partie flexible (8).

9. Ensemble selon l'une quelconque des revendications précédentes, comprenant en outre une poignée (18) raccordée à la base (19) de ladite canalisation (10), pour transférer ladite partie flexible (9) de la position de transfert vers la position de distribution.

10. Ensemble selon l'une quelconque des revendications précédentes, comprenant en outre un passe-fil (14) adapté pour être reçu dans une ouverture (16) du véhicule, ledit passe-fil (14) présentant une partie à diamètre réduit (24) de sorte que la canalisation (10) peut être bloquée en prise avec ledit passe-fil (14) dans ladite position de distribution (P2).

11. Dispositif de chauffage, de ventilation et/ou de climatisation, **caractérisé en ce qu'**il comprend un ensemble d'évacuation de condensation selon l'une quelconque des revendications précédentes.
